(19) Europäisches Patentamt

European Patent Office

Office européen des brevets

(11) **EP 1 406 145 A2**

(12) **EUROPEAN PATENT APPLICATION**

(43) Date of publication:
**07.04.2004 Bulletin 2004/15**

(51) Int Cl.[7]: **G06F 1/00**

(21) Application number: **03013398.7**

(22) Date of filing: **18.06.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **01.10.2002 JP 2002288204**

(71) Applicant: **Hitachi, Ltd.**
**Chiyoda-ku, Tokyo 101-8010 (JP)**

(72) Inventors:
• **Kaminaga, Masahiro, Hitachi, Ltd., Int. Prop. Gp.**
  **Chiyoda-ku, Tokyo 100-8220 (JP)**
• **Endo, Takashi, Hitachi, Ltd., Int. Prop. Gp.**
  **Chiyoda-ku, Tokyo 100-8220 (JP)**
• **Watanabe, Takashi, Hitachi, Ltd., Int. Prop. Gp.**
  **Chiyoda-ku, Tokyo 100-8220 (JP)**

(74) Representative: **Beetz & Partner Patentanwälte**
**Steinsdorfstrasse 10**
**80538 München (DE)**

(54) **Method and device for accessing a memory to prevent tampering of a program in the memory**

(57)     A method and device are provided for accessing a memory of an information processing device in order to prevent tampering to a program in the memory. In one example, the method involves making it difficult to extract inner information inside an integrated circuit (IC) chip via analyzing variations of power consumption of the IC chip. A relationship between address information processed inside the IC chip and the power consumption is made inconspicuous. The Difference between hamming distances of certain memory portions is reduced so as to reduce changes of a program counter in each execution of conditional branch instructions.

F I G. 6

**Description**

## BACKGROUND OF THE INVENTION

Field of the Invention

The present invention generally relates to techniques for accessing memory and, more particularly, to techniques for designing tamper-resistant information-processing devices, such as integrated circuit (IC) cards, having high security.

Discussion of Background

Mobile terminals including mobile phones and integrated circuit (IC) cards (smart cards) of the Global System For Mobile Communications (GSM) standard, which are widely used in Europe, may be used in relations to user authentications or electronic commerce. When mobile terminals are used to access electronic money, mobile terminals take the form of the IC card. In the case of the GMS mobile phone (for example, GSM mobile radiotelephone system), it takes the form called of a Subscriber Identification Module (SIM). Both the SIM and the IC card have a construction of a semiconductor chip with terminals pasted on a plastic board. The IC card will be described for explanatory purposes.

The IC card is the device that executes retention of personal information such that rewriting without permission is not permitted. The IC card also executes encryption and decryption of data. The IC card itself does not have the power supply, and when inserted into a card reader for the IC card, the IC card is powered and becomes operational. When it is operational, the IC card receives commands transmitted from the card reader, and according to the commands, executes data transfer and other processing. For further detail of the IC card, See "IC card," by Junichi Mizusawa, edited by the Japanese Electronic Information Communication Institute, published by the Ohmsha.

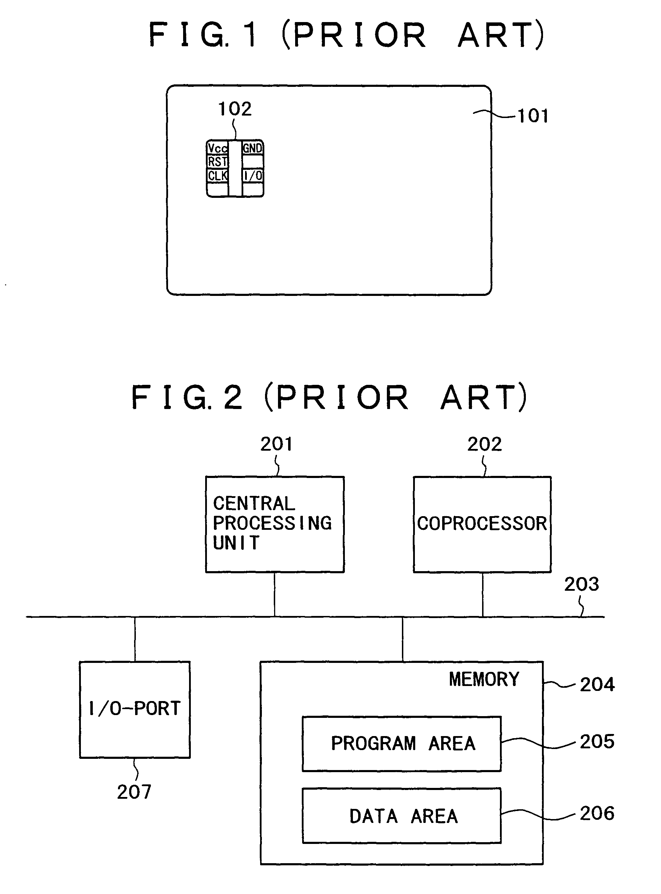

FIG. 1 is a block diagram of an IC card 101 and a semiconductor chip 102 for the IC card. The semiconductor chip 102 is mounted on the card 101. As illustrated in FIG. 1, the IC card 101 generally has a power supply contact Vcc, ground contact GND, reset contact RST, input/output contact I/O, clock contact CLK, at the positions stipulated by the standard ISO7816. The IC card receives the power supply and performs communications through these contacts. See for example, "Smartcard Handbook," by W. Rankl and W. Effing, 1997, page 41.

The chip for the IC card is configured basically in the same manner as a general microcomputer. As shown in FIG. 2, the chip includes a central processing unit (CPU) 201, a memory 204, an input/output (I/O) port 207, and a coprocessor 202 (some cases exclude the coprocessor). The CPU 201 executes logical operations and arithmetic operations, and the memory 204 stores programs and data. The I/O port executes communications with the card reader. The coprocessor executes encryption processing itself, or high-speed operations required for the encryption processing. The coprocessor includes, for example, a special operation unit for executing the modular multiplication of the RSA cryptosystem, and an enciphering unit for executing the processing of the DES cryptosystem, and so forth. There are many IC card processors that do not contain the coprocessor. The data bus 203 connects these units.

The memory 204 includes ROM (Read Only Memory), RAM (Random Access Memory), EEPROM (Electrically Erasable Programmable Read Only Memory), and so forth. The ROM is a memory incapable of modifying the contents from outside, which mainly stores programs. The RAM is a memory capable of freely rewriting the contents. However, when the power supply is suspended, the contents stored are lost. When the IC card is pulled out from the card reader, the power supply is suspended, and the contents of the RAM are extinguished accordingly. The EEPROM is a memory capable of retaining the contents even when the power supply is suspended. When there is a necessity of rewriting and retaining the data even when the IC card is pulled out from the card reader, the EEPROM is employed. For example, the balance of a prepaid card is rewritten each time in use, and since it is necessary to retain the data after pulled out from the card reader, the EEPROM is employed.

Since programs and important information are sealed up inside the chip for the IC card, the IC card is employed for storing the important information and/or executing encryption processing inside the card. It was once widely viewed that the difficulty of decryption of the IC card is the same as the difficulty of decoding the encryption algorithm inside the card.

However, observing the power consumption while the IC card is executing the encryption processing and analyzing it will give a possibility of estimating the contents of encryption processing and the encrypted key much easier than directly decoding the encryption algorithm. The power consumption can be examined with an oscilloscope, by measuring the voltage variation between the Vcc contact and the ground contact of the IC card. Such risky aspects of the IC card are mentioned in section 8.5.1.1 Passive Protective Mechanism, page 263, the "Smart Card Handbook," by W. Rankl and W. Effing.

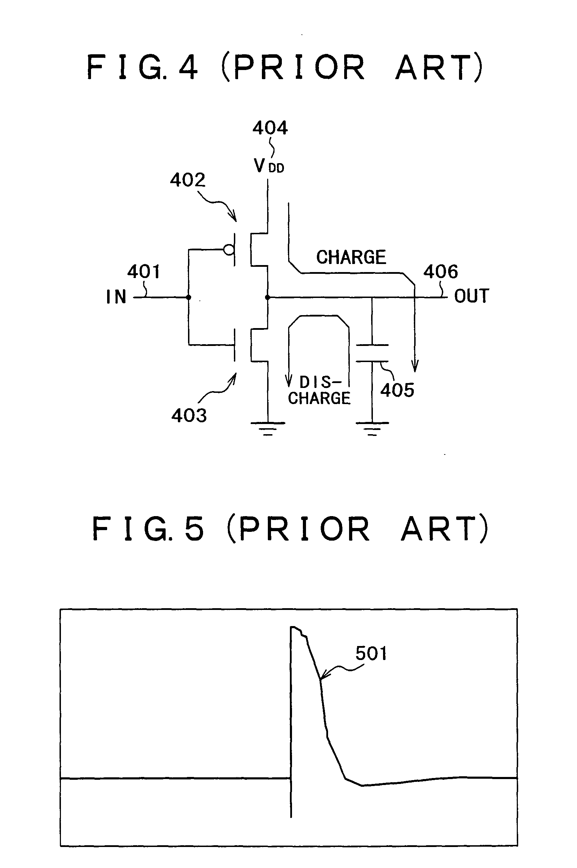

The complimentary metal oxide semiconductor (CMOS) transistors constituting the chip for the IC card generate power consumption, when the output state changes from 1 to 0 or from 0 to 1. For example, a CMOS inverter has a positive channel metal oxide semiconductor (PMOS) 402, a negative channel metal oxide semiconductor (NMOS) 403, and a capacitor 405 connected as shown in FIG. 4. The CMOS inverter answers Low (= 0) to an output 406 when the voltage applied to input 401 is High (= 1), and answers High to output 406 when the voltage applied to input 401 is Low. In this condition, the capacitor 405 is charged from the drive voltage Vdd 404 through the PMOS 402, and is discharged through the NMOS 403, according to the ON/OFF state of PMOS 402, NMOS 403. This charge and discharge accompanies the power consumption.

The variation of the power consumption in terms of time generated here shows a waveform 501, as shown in FIG. 5. The waveform observed through the contacts of the IC card is such that the waveforms of the power consumption as illustrated in FIG. 5 are superposed with time delays.

Especially in the data bus 203, due to the power consumption of the bus driver, the wiring, and the charge capacities of the transistors connected to the wiring, the power consumption is generated when the value of the bus changes from 1 to 0 or from 0 to 1. Therefore, there is a possibility of sensing which part is operating in the chip for the IC card, by observing the power consumption.

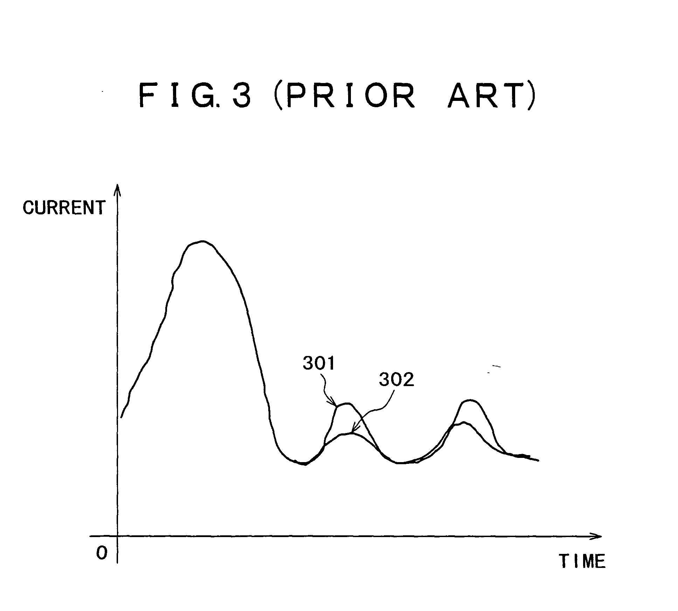

FIG. 3 illustrates a waveform of the power consumption in one cycle of the chip for the IC card. Depending on the data processed, the waveform varies as 301 and 302. This difference occurs depending on the data flowing through the bus 203 and the data processed by the CPU 201.

The coprocessor 202 is able to perform the modular multiplication of 512 bits, for example, in parallel with CPU. Accordingly, it is possible to observe over a long time the waveforms of the power consumption different from the power consumption of the CPU. And, an observation of characteristic waveforms will make it possible to easily measure the number of execution of the coprocessor. If the number of execution of the coprocessor has any relevance to the encrypted key, there will be a possibility of estimating the encrypted key from the number of execution of the coprocessor.

Also, if there is a bias dependent on the encrypted key in the operation of the coprocessor, the bias can be calculated from the power consumption, which gives a possibility of estimating the encrypted key. The same circumstances exist in the CPU.

A typical example of the power consumption depending on the data is found in the power consumption of an address-bus. Since the address-bus has to be always operational, the control thereof uses the static system. The static control system does not clear data each time, and consumes the power corresponding to a difference between the value directly before the current and the current value. For example, if the address (program counter) changes each two bits as 800C → 800E → 8010 → 8012 → 8014 → 8016 → 8018, the power consumption varies almost in proportion to the following changed bit numbers each.

Changed bit number = 1, 800C → 800E
Changed bit number = 4, 800E → 8010
Changed bit number = 1, 8010 → 8012
Changed bit number = 2, 8012 → 8014
Changed bit number = 1, 8014 → 8016
Changed bit number = 3, 8016 → 8018

Here, the values of addresses are notated according to the hexadecimal notation (hereunder, the notation of addresses will be the same, unless otherwise specified).

Examining the variations of the power consumption by means of this property will make it possible to unfairly take out inner information without depackaging the IC chip. Such a method is called the Power Analysis.

As a typical example, a method of extracting the secret exponent of the RSA cryptosystem by examining the changes of addresses will be mentioned. There are lots of documents concerning the extraction of inner secret information by the Power Analysis. See for example, "Differential Power Analysis: Leaking Secrets," by Paul Kocher, Joshua Jaffe, and Benjamin Jun; and "Advances in Cryptology Proceedings of Crypto'99," Springer-Verlag, Lecture Notes in Computer Science 1666, pages 388-397 (the following URL shows similar content. http://www.cryptography.com/dpa/technical/index.html ).

These documents disclose the principle of the Power Analysis, and do not deal with the analysis method itself, which will be given hereunder.

First, the RSA cryptosystem, the window method, and the operation of a microcomputer and program counter will be explained in brief.

(RSA Cryptosystem)

The RSA cryptosystem takes on two very large prime numbers P, Q such as 512 bits, makes the product of them, N = PQ, adopts this N and the number E being mutually prime with (P-1)(Q-1) as the public key, and registers these numbers N and E on the list of the public key. Now, to a holder A of this public key, a transmitter B transmits to encrypt data (plaintext) R that is expressed by the number being not less than 1 and not more than N-1, as:

$$Y = R^E \bmod N$$

Here, Y^E denotes the symbol to raise Y to the power E. Having received this encrypted text Y, the holder A of the public key calculates:

Y^X mod N

using a secret exponent X that meets XE mod (P-1) (Q-1) =1. Here, (P-1)(Q-1) is the value $\phi$(N) of the Euler's totient function of N. This value is equal to the number of the natural number that is mutually prime to N. According to the Euler's theorem,

$$R^{\wedge} ( (P-1) (Q-1) ) \bmod N = 1$$

is satisfied. On the other hand, since XE = 1 + k(P-1)(Q-1) is met (k: an integer),

```
Y^X mod N

= R^(XE) mod N

= R^((1 + k(P-1)(Q-1)) mod N

= R*R^(k(P-1)(Q-1)) mod N

= R
```

is met. Therefore, the holder A is able to decode the plain text R of the transmitter B by calculating R^X mod N. In this case, P, Q being the prime factors of N are used for calculating the secret exponent X. The method of calculating X without intervention of the prime factorization is not known up to now. The factorization of the product of large prime numbers will require unrealistic time, accordingly the secret exponent of the holder A is secure even if N is opened to the public.

(Window Method)

The body of the calculation in the RSA cryptosystem lies in the modular exponentiation, which is generally executed by combining modular multiplications. Now, consider a microcomputer with a coprocessor that possesses A register, B register, and N register, calculates A^2 mod N or A*B mod N with these registers, and returns the result to A register (this is a standard specification in the IC card). In such a microcomputer, the window method given in the following [algorithm 1] is widely used for executing the modular exponentiation.

[Algorithm 1]

```
input Y, X=(X[n-1]X[n-2]…X[1]X[0]), N

output Y^X mod N

A = 1                                        step 1

B = Y                                        step 2

For j = n-1 to 0 step 1{                     step 3

  A = A^2 mod N                              step 4

  if X[j] = 1 then A = A*B mod N             step 5

}

output A                                     step 6
```

In this algorithm, n corresponds to the bit length of X, X[n-1]X[n-2]...X[1]X[0] is the binary expression of X. Roughly, the square modular multiplication [A^2 mod N] (step 4) and the modular multiplication [A*B mod N](step 5) are combined in the execution. If the number of one in X[n-1]X[n-2]...X[1]X[0] is given by H(X), the operation of n times for the square modular multiplication [A^2 mod N] and the operation of H(X) times for the modular multiplication [A*B mod N] are repeatedly executed.

Here, it should be confirmed by an example using numeric values that the above algorithm 1 gives the correct result. To confirm the algorithm, since it is sufficient to embody the exponent X, Y and N are used as they remain as the symbols.

S = Y^45 mod N is calculated according to the algorithm 1. Here, the exponent 45 can be expressed in the binary number as:

45 = 101101

Therefore, if the exponent is expressed with the symbols of the algorithm 1, it will be as follows: X[5] = 1, X[4] = 0, X[3] = 1, X[2] = 1, X[1] = 0, X[0] = 1.

The bit number is 6, and the initial value S is 1.

(1) when j = 5
    Since the initial value of S is 1, squaring this and dividing by N will produce the residue of 1 (step 4).
    As the exponent is X[5] = 1, step 5 is executed, and

```
S = 1*Y mod N

  = Y mod N
```

is obtained.
(2) when j = 4
    Since the value of S at this time is S = Y mod N, squaring this and dividing by N will produce the residue of S = Y^2 mod N.
    As the exponent is X[4] = 0, step 5 is not executed, and the residue remains as S = Y^2 mod N.
(3) when j = 3
    Since the value of S at this time is S = Y^2 mod N, squaring this and dividing by N will produce the residue of S = Y^4 mod N.

As the exponent is X[3] = 1, step 5 is executed, and

S = Y^4*Y mod N = Y^5 mod N

is obtained.

(4) when j = 2

Since the value of S at this time is S = Y^5 mod N, squaring this and dividing by N will produce the residue of S = Y^10 mod N.

As the exponent is X[2] = 1, step 5 is executed, and

S = Y^10*Y mod N = Y^11 mod N

is obtained.

(5) in time of j = 1

Since the value of S at this time is S = Y^11 mod N, squaring this and dividing by N will produce the residue of S = Y^22 mod N.

As the exponent is X[1] = 0, step 5 is not executed, and the residue remains as S = Y^22 mod N.

(6) when j = 0

Since the value of S at this time is S = Y^22 mod N, squaring this and dividing by N will produce the residue of S = Y^44 mod N.

As the exponent is X[0] = 1, step 5 is executed, and

S = Y^44*Y mod N = Y^45 mod N

is obtained, which is the desired result.

The algorithm 1 executes the processing every one bit of the exponent, however it is possible to execute the processing putting plural bits together. For example, in the case of executing the modular exponentiation by means of the window method that takes on two bits as the processing unit, the processing is executed according to the following [algorithm 2]. Here, the data length of X is n-bits, and X[j] (j=0,1,2,...n/2-1) represents two-bit blocks of X.

[Algorithm 2]

```
input Y, X=(X[n/2-1]X[n/2-2]…X[1]X[0]), N

output Y^X mod N

/*begin precomputation*/

Y0 = 1

Y1 = Y

Y2 = Y^2 mod N

Y3 = Y^3 mod N

/*end precomputation*/

A = 1

For j = n/2-1 to 0 step 1{

    A = A^2 mod N;
```

```
A = A^2 mod N;

If X[j] = 0 then B = Y0 mod N

Else

If X[j] = 1 then B = Y1 mod N

Else

If X[j] = 2 then B = Y2 mod N

Else

If X[j] = 3 then B = Y3 mod N

Else If

A = A*B mod N

}

output A
```

The modular exponentiation according to the [algorithm 2] can be executed in practice, which can be confirmed in the same manner as the case of the algorithm 1.

(Operation of Microcomputer and Program Counter)

A microcomputer incorporates a program counter that designates an address where to read a program or data. The microcomputer reads the bit information stored at the address that the program counter designates. The bit information can be divided into the operation code and the operand. The operation code is a specification as to how the microcomputer should operate the data, and the operand is to designate the data and/or register of the operation object. Here, the register is the same as the RAM in terms of the structure, which is incorporated in the CPU, and exchanges data with the logic (or arithmetic) unit inside the CPU.

In order to discuss the above concepts, consider simple instruction streams on the presumption of an 8-bit microcomputer.

[Code Example 1]

```
8000 MOV.B C3, R2H   step 1

8002 MOV.B F2, R4H   step 2

8004 XOR R2H, R4H    step 3
```

8000, 8002, and 8004 in the above code example 1 are the addresses indicating the location of the instruction, which are expressed by the hexadecimal notation. The operation of the microcomputer to execute the code example 1 will be explained. First, the microcomputer sets the program counter to 8000, reads the operation code MOV.B, the operand C3, and the register R2H, and moves the data C3 to the register R2H (step 1). Next, the microcomputer advances the program counter by 2, to 8002 (step 2). At step 2, the microcomputer moves the data F2 to the register R4H. After completing this processing, the microcomputer further advances the program counter by 2, to 8004. At step 3, the microcomputer executes the exclusive OR of the data C3 stored in the register R2H and the data F2 stored in the register R4H, C3 EXOR F2 (=11000011EXOR11110010), and stores the result 00110001 in the register R4H.

A more complicated code example will be given. Only the meaning of the operations will be explained.

[Code Example 2]

```
8100 MOV.W  #Yj_TOP, R1            step 1

8102 MOV.W  #B_TOP, R2             step 2

8104 MOV.B  #DATA_LENGTH, R3H      step 3

8106 loop: MOV.W @R1, R4           step 4

8108 MOV.W R4, @R2                 step 5

810A ADDS #2, R1                   step 6

810C ADDS #2, R2                   step 7

8110 DEC.B R3H                     step 8

8112 BNE   loop                    step 9
```

The code example 2 is a program that makes the microcomputer move Yj having the word size designated by DATA_LENGTH to B register of the coprocessor. Here, Yj_TOP signifies the leading position of the address where the data Yj is stored, and B_TOP signifies the leading position of the address of B register. In the code example 2, Yj is located on the RAM. At step 1, the microcomputer moves the leading address of Yj to register R1, and at step 2, moves the leading address of B register to the register R2. At step 3, the microcomputer moves the word size of data DATA_LENGTH to register R3H. The instructions from step 4 through step 9 are repeatedly executed in loop by DATA_LENGTH times. At step 4, the microcomputer moves the data of the address that register R1 indicates to register R4, and step 5, moves the concerned data to the address that register R2 indicates. At each of step 6 and step 7, the microcomputer adds 2 to R1, R2. This means to advance each of the addresses by 2. At step 8, the microcomputer decrements counter R3H. At step 9, according to whether the value of the counter is 0 or not, the microcomputer executes a conditional branch. If it is not 0, the microcomputer returns the program counter to the address 8106 (step 4) that the label loop indicates, and continues the loop. This program is necessarily used for executing the processing of the RSA cryptosystem according to the [algorithm 1].

In this case, Yj has four types of Y0, Y1, Y2, and Y3.

Y0, Y1, Y2, and Y3 are located at different positions on the RAM. Now, as a most extreme case, the following will be supposed, in which DATA_LENGTH is 64 (128 bytes = 1024 bits), the leading address of Y0 is 0000, the leading address of Y1 is 0080, the leading address of Y2 is 0100, and the leading address of Y3 is 5108. The above address setting is made for the convenience of explanation, and practically the data are allocated to continuous addresses in many cases.

Here, in the instruction of address 8006, MOV.W @R0, R4, the program counter changes as follows, according to which one of Y0, Y1, Y2, and Y3 is the data.

    when Y0, 8106 to 0000 (number of inverted bits, 4)
    when Y1, 8106 to 0080 (number of inverted bits, 5)
    when Y2, 8106 to 0100 (number of inverted bits, 3)
    when Y3, 8106 to 5180 (number of inverted bits, 6)

As already mentioned, since the power is consumed according to the.number (hamming distance) of inverted bits number, the data, Y0, Y1, Y2, and Y3 can be discriminated during the data transfer. Note that any particular address is represented by a series of high voltage bits and low voltage bits. A high voltage bit has a predetermined high power level. A low voltage bit has a predetermined low power level. Any particular hamming distance corresponds to a change in power consumption due to voltage changes that are associated with changes of bits.

Further, each time the loop is repeated, the waveform of the power consumption can be observed, which is proportional to the hamming distance from 8106. For example, during the transfer of Y0, the power proportional to Ham (8106, 0000), Ham (8106, 0002), Ham (8106, 0004), ... , Ham (8106, 007E) can be observed.

Therefore, it becomes possible to apply four kinds of labels, according to the data transfer, to each of two bits of the exponent X in the RSA encryption processing. Naming these as DA, DB, DC, DD for simplicity, in the case that a part of the actual exponent X assumes a string of 10 11 01 00 11 01 10 10, for example, the sequence of labels of DA, DB, DC, DD, DB, DC, DA, DA can be obtained from observation of the power consumption. Each of these corresponds to anyone of 00, 01, 10, 11, and the number of the permutation in this case is the factorial of 4, which reaches 24 only. Therefore, it is possible to easily find out the correct bit string. This is applicable to the exponent X of an arbitrary length.

This example allocates the data so as to intentionally change the hamming distance. If the leading address of Y3 is allocated at 0180 as an actual position, for example, Y0 and Y3 will not be discriminated. However, the number of events can be reduced to a large degree, accordingly the time for calculating the correct exponent X can be reduced tremendously. This is a typical method for finding out the secret exponent, using the power variations during the address changes. Naturally, this method is effective to the cryptosystem other than the RSA cryptosystem, for example, an open-key encryption of the elliptic curve cryptosystem. There is also a possibility of extracting the secret exponent by the method of examining the address changes in the SBOX processing of the secret exponent cryptosystem such as the DES (data encryption standard).

## SUMMARY OF THE INVENTION

An object of the present invention is to protect the inner secret information of the IC chip by reducing the variations in the power consumptions accompanied with the address changes.

The current generated by controlling the address bus is proportional to the number of inverted bits (hamming distance) of the address accompanied with the change of the programmable counter. Also, by observing the current, there can be a chance to detect the secret data inside the IC chip.

In reverse, when the address changes in a manner that the hamming distances of data do not change, the same power is consumed. Consider a program such that a subroutine starts at b90c, the program starts at ba0c (starting address), and the others are the same. For simplicity, assume that the program counter is incremented by two, the changes of both the program counters are seen as follows.

b90c → b90e → b910 → b912 → b914 → b916

ba0c → ba0e → ba10 → ba12 → ba14 → ba16

Since the power consumptions in these cases are proportional to the numbers of the inverted bits in these changes, the power waveform proportional to the completely same hamming distance:

1    4    1    2    1

can be observed. Therefore, in view of the address, they cannot be discriminated from the power consumption.

If this is applied to a practical case, it will be possible to prevent leakage of the power consumption accompanied with the address changes corresponding to the secret key of the cryptosystem and so forth.

A first method for solving the problem of power leakage is to average the changes of the program counter.

A second method for solving the problem of power leakage is to modify the change of the program counter in accessing the same data at each processing. The second method is based on a concept reverse to the above concept of the first method involving averaging the changes.

Since the program packaging system based on the first method or the second method depends on the structure of the program, it is necessary to change the system according to several structures of the program.

The first method may involve allocating the data or the subroutines accessed immediately after move instructions or conditional branch instructions or jump instructions located at the positions of which address values are PCS are executed, to the positions starting at the addresses PCD[1], PCD[2], ..., PCD [m] such that Ham ( PCS, PCD[1]) =Ham(PCS, PCD[2])= ... =Ham(PCS, PCD[m]). Allocating the data and the programs in this manner will reduce the differences in the power consumptions generated by the differences in the hamming distances between the addresses.

The second method may involve allocating the data or the subroutines accessed immediately after move instructions or conditional branch instructions or jump instructions located at the positions of which address values are PCS are executed, to the positions starting at the addresses PCS[1], PCS[2], ..., PCS [m] such that Ham(PCS[1], PCD) =Ham(PCS[2], PCD)= ... =Ham(PCS[m], PCD) is met, and further changing the execution order of m pieces of instructions located at PCS [j] (j=1, 2, 3,...,m), every time at each execution of the program by a source of unpredictable information.

The invention encompasses other embodiments of a method, an apparatus, and a computer-readable medium, which are configured as set forth above and with other features and alternatives.

## BRIEF DESCRIPTION OF THE DRAWINGS

The present invention will be readily understood by the following detailed description in conjunction with the accompanying drawings. To facilitate this description, like reference numerals designate like structural elements.

FIG. 1 is a schematic representation of an IC card;

FIG. 2 is a configuration diagram of a microcomputer;

FIG. 3 is a waveform representation of a consumed current;

FIG. 4 is a structure diagram of a complimentary metal oxide semiconductor (CMOS) inverter;

FIG. 5 is a waveform representation of power consumption of the CMOS inverter;

FIG. 6 is a basic structure representation illustrating positioning of a program and positioning of data in a memory, in accordance with a first embodiment of the present invention;

FIG. 7 is a basic structure representation illustrating positioning of a program and positioning of data in a memory, in accordance with a second embodiment of the present invention; and

FIG. 8 is a basic structure representation illustrating positioning of a program and positioning of data in a memory, in accordance with a third embodiment of the present invention.

## DESCRIPTION OF THE PREFERRED EMBODIMENTS

An invention for a method and device for accessing a memory of an information processing device in order to prevent tampering to a program in the memory is disclosed. Numerous specific details are set forth in order to provide a thorough understanding of the present invention. It will be understood, however, to one skilled in the art, that the present invention may be practiced without some or without all of these specific details.

The description hereunder will follow the format of the assembler language of AE microcomputer (former H8 microcomputer) from Hitachi Ltd. As a general commentary concerning the H8 microcomputer, see "A Complete Manual for H8 Microcomputer" by Sachiho Fujisawa, published by Ohmsha, which is provided here for information purposes only, and unnecessary for a complete disclosure of the invention. The address space is assumed such that 0000 to 8000 in the hexadecimal notation lie in a ROM (which may be replaced by EEPROM or FRAM) and 8000 to FFFF lie in RAM. Also, it is assumed that the CPU executes the processing by a unit of 8 bits, and the registers are available from R0H, R0L to R7H, R7L (the upper 8 bits and lower 8 bits of R0 resistors each, totally 16 bits for R0).

A simple explanation will be given on the instruction word of the H8 microcomputer.

The transfer instruction is the core instruction of the assembler language. The transfer instruction can be divided into MOV.B for transferring 1-byte (8-bits) data and MOV.W for transferring 2-bytes data. The following move operation codes are important.

(A) MOV.B(W)#(value of 8 bits or 16 bits), register name

This instruction is called the immediate move operation, which moves the value of 8 bits or 16 bits in the parenthesis to the register designated by the register name. For example, MOV.B#F9, R2H

is to move the data F9 to the register R2H.

(B) MOV.B(W) @(register name 1), register name 2

This instruction is to move the data at the position that the address stored in the register indicated by the register name 1 designates, to the register indicated by the register name 2. For example,

MOV.B(W) @R2, R4

is to move the data (2 bytes) stored at the address that the register R2 indicates to the register R4H.

(C) MOV.B(W) register name 1, @(register name 2)

This instruction is to move the data in the register designated by the register name 1 to the address position stored in the register name 2. For example,

MOV.B(W) R4, @R1

is to move the data stored in the register R4 to the address that the register R1 indicates.

(D) MOV.B(W) @(label name (address), register name 1), register name 2

This instruction is to move the data contained at the address position obtained by adding the value stored in the register designated by the register name 1 to the address indicated by the label name, to the register designated by the register name 2. The value stored in the register designated by the register name 1 is sometimes called 'displacement'.

The H8 microcomputer includes various addressing modes other than the above (A), (B), (C), and (D), and being unnecessary here, they will be omitted.

Other than the move operations, various logical operations can be executed between registers. For example,

ADD.B R2H, R4H

is to add the value stored in the register R2H and the value stored in the register R4H, then write the result in the register R4H. Other than this, the operation codes such as SUB (subtraction), XOR (exclusive OR), AND (logical product) and so forth are provided.

Further, the operation codes such as BNE for subtracting 1, and ADDS/SUBS for incrementing/decrementing the address are frequently used.

The conditional branch instruction is also important. This instruction is to change the program counter according to the values of various flags indicating the result of the operation executed directly before. The microcomputer contains a register called the Condition Code Register (CCR) that stores various flags. There are various types of flags in the CCR, however only Z (zero flag) and C (carry flag) will be explained here. The zero flag Z is turned into 1, if the result of the operation executed directly before is 0; Z is turned into 0 if it is not 0. As for the conditional branch instruction that corresponds to the change of Z, there are BEQ and BNE. BEQ is the instruction to jump into the address designated if Z is 0; BNE is the instruction to jump into the address if Z is not 0. For example, the following program:

XOR R2H, R2L
BEC 1st address
BNE 2nd address

is to change the value of the program counter into the first address, if the values contained in the registers R2H and R2L are equal, and is to change the value of the program counter into the second address, if the values are not equal. Note that the first program counter starting address may be equal to the second program counter starting address.

The carry flag C is turned into 1, if the result of the operation executed directly before does not produce a carry; C is turned into 0, if it does not produce a carry. As for the conditional branch instruction that corresponds to the change of C, there are BCS and BCC. BCS is the instruction to jump into the address concerned if C is 1; BCC is the instruction to jump into the address designated, if C is 0.

Some instructions to change the program counter execute the change unconditionally, not depending on the value of the CCR.

For example, the jump instruction:

JMP @R1

is to change the program counter into the value that the register R1 designates.

Similarly, the jump instruction to a subroutine:

JSR subroutine

is to change the program counter forcedly into the address designated by the subroutine. However, JSR, being different from JMP, executes the instruction 1 through the instruction X in the subroutine to which the address jumped:

```
subroutine:     instruction 1

                instruction 2

                ......

                instruction X

                RTS
```

and changes the program counter into the address position directly after the JSR instruction, by RTS (Return From Subroutine) instruction in the end.

In addition, DEC instruction for decrementing the counter, and ADDS instruction for changing the address are often used.

For example,

DEC R3H

is the instruction to decrease the value of the register R3H by 1, and

ADDS#2, R2

is the instruction to add 2 to R2.

This concludes the explanation of the H8/300 assembler language.

Using the H8/300 assembler language of the H8 microcomputer from Hitachi Ltd., the preferred embodiments of the invention will be described in detail. Generally, "hamming distance" means a measurement of bit changes between a first address value and a second address value. In notation form "Ham(A,B)" means a measurement of bit changes between address value A and address value B.

Now, when the data of 2 bits are '00', '01', '10', and '11', let's consider a program to move the data Y0, Y1, Y2, and Y3 to the data register CDB of a coprocessor. It is assumed that Y0, Y1, Y2, and Y3 are the data having the same length DATA_LENGTH, and are stored in advance at specified positions in the RAM. The leading addresses of the data are given by Y0_TOP, Y1_TOP, Y2_TOP, and Y3_TOP, respectively. And, the leading address of CDB is given by CDB_TOP.

Further, the leading addresses are determined so as to satisfy the (condition 1):

$$Ham(Copy, Y0\_TOP)$$

$$=Ham(Copy, Y1\_TOP)$$

$$=Ham(Copy, Y2\_TOP)$$

$$=Ham(Copy, Y3\_TOP)$$

For example, if DATA_LENGTH=1024/16=64, Copy=0100, Y0_TOP=C200, Y1_TOP=C400, Y2_TOP=C700, and Y3_TOP=C800 are given,

Ham(Copy,Y0_TOP)=Ham(0100,C200)=4
Ham(Copy,Y1_TOP)=Ham(0100,C400)=4
Ham(Copy,Y2_TOP)=Ham(0100,C700)=4
Ham(Copy,Y3_TOP)=Ham(0100,C800)=4

are obtained. Further, the data are allocated on the RAM without overlapping, and the condition 1 is satisfied at each stage of the word transfer.

The following program is composed of three parts. The first is the main part with MAIN as the leading address (label), the second is the Move Routine with Copy as the leading address, and the third is the data part with table as the leading address. In the execution of the program, the value of the program counter is set to MAIN in the beginning.

[Embodiment 1]

```
/***MAIN***/

MAIN:

0000 MOV.W @d, R2

0002 SHLL R2

0004 MOV.W @(table, R2), R0

0006 MOV.W#CDB_TOP, R1

0008 MOV.B #DATA_LENGTH, R3H

000A JSR Copy


/***Copy Routine***/

Copy:

0100 MOV.W @R0, R4

0102 MOV.W R4, @R1

0104 ADDS#2, R0
```

**EP 1 406 145 A2**

```
0106 ADDS#2, R1

0108 DEC.B R3H

010A BNE Copy

010C RTS


/***table***/

table:

0200 .DATA.W Y0_TOP;(=C200)

0202 .DATA.W Y1_TOP;(=C400)

0204 .DATA.W Y2_TOP;(=C700)

0206 .DATA.W Y3_TOP;(=C800)
```

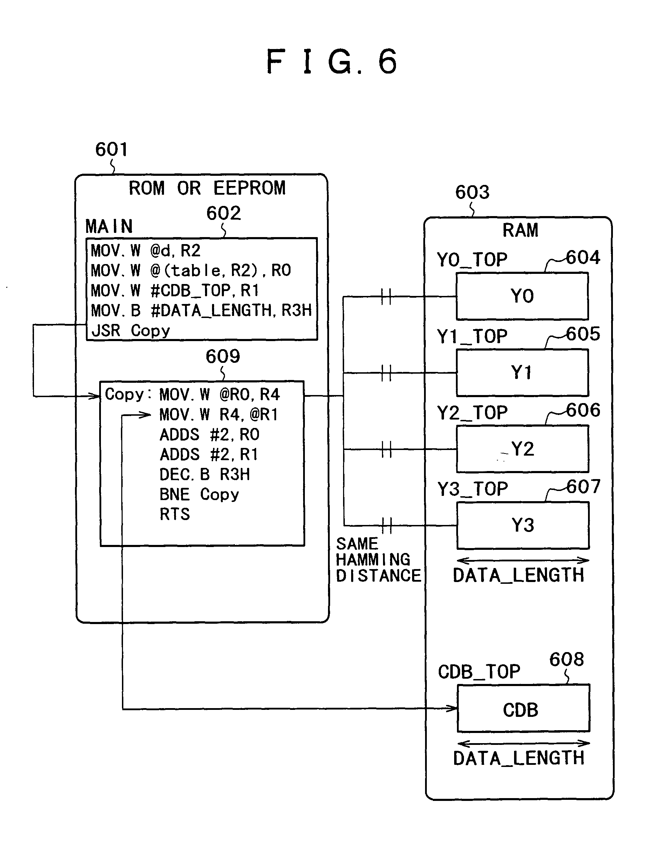

The operation of this program will be described on the basis of the Embodiment 1 and FIG. 6.

FIG. 6 is a basic structure representation illustrating the position of the program and the positioning of data in a memory, in accordance with a first embodiment of the present invention. CDB is regarded as functioning as a part of the RAM.

First, since the program counter indicates MAIN=0000, the microcomputer executes the instructions from MOV.W @d, R2 in order.

At 0000, the 2-bits data d is read from the concerned address, which is stored in the register R2. At 0002, the value of the register R2 is shifted left by 1 bit. This means doubling the value of R2. At 0004, the microcomputer moves the data stored at the address having the value of R2 added to table=0200 to the register R0. If the value of d is 3, for example, the microcomputer stores in the register R0 the address C800 that the data Y3_TOP stored at the address of 0200+2*3=0206 indicates.

At 0006, the leading address CDB_TOP of CDB is stored in the register R1. At 0008, the data of Word length DATA_LENGTH=64 is stored in the register R3H. At 000A, by the instruction of JSR Copy, the microcomputer changes the value of the program counter into 0100 (label name "Copy"). At 0100, the microcomputer moves the data of the address stored in the register R0 to the register R4, and at 0102, moves the value of R4 to the address position stored in R1. At 0104, 0106, the address is incremented by 2, and at 0108, the value of the counter stored in the register R3H is decremented by 1. At 010A, the microcomputer changes the program counter again into the leading position of the copy routine, if the value of the counter is not 0, and repeats the above operation until the value of the register R3H becomes 0. When the value of R3H becomes 0, the program counter becomes 010C, where the program passes through the subroutine, the counter is changed into the address next to 000A, namely, 000C, and the processing is completed.

Accompanied with the move operation at the address 0100, the program counter in reading the data Y0, Y1, Y2, and Y3 changes from 0100 into R0. In this case, the hamming distance between the value contained in R0 and 0100 is always the same, that is, in the case of d=0, the hamming distance varies as:

0100 → C200 (hamming distance 4)
0100 → C202 (hamming distance 5)
0100 → C204 (hamming distance 5)
...
0100 → C080 (hamming distance 4)
and in the case of d=2, the hamming distance varies as:
0100 → C400 (hamming distance 4)
0100 → C402 (hamming distance 5)

**14**

0100 → C404 (hamming distance 5)

...

0100 → C480 (hamming distance 4)

and the way of varying the hamming distance is completely the same as the case of d=0. It will be apparent that the hamming distance varies in the same manner in the case of d=2,3. Accordingly, it becomes extremely difficult to find out the value of d by way of observing the power consumption that varies to follow the changes of the addresses.

The number of data to be transferred is 4 in this case, but this is just for the convenience of explanation, and naturally taking on a general number as the data number will not mar the concept of the invention. Further, the data allocation shown here is just one example. When packaging the program in the other microcomputers, it is naturally necessary to allocate plural data pieces at the positions where the same hamming distances can be obtained, in compliance with the address spaces of the individual microcomputers. Here, the program to read plural data pieces has been exampled, however reversing the transfer direction will make it possible to apply the concept of the invention to the case of writing as well.

The above embodiment is applicable to a case that there is only one transfer instruction on the program side to correspond to the plural data pieces, however some cases have plural transfer instructions on the program side.

In a second embodiment, when the data of 1 bit is '0' and '1', the program is to move the data Y0, Y1 to the data register CDB of a coprocessor. Here, the leading address of CDB is given by CDB_TOP.

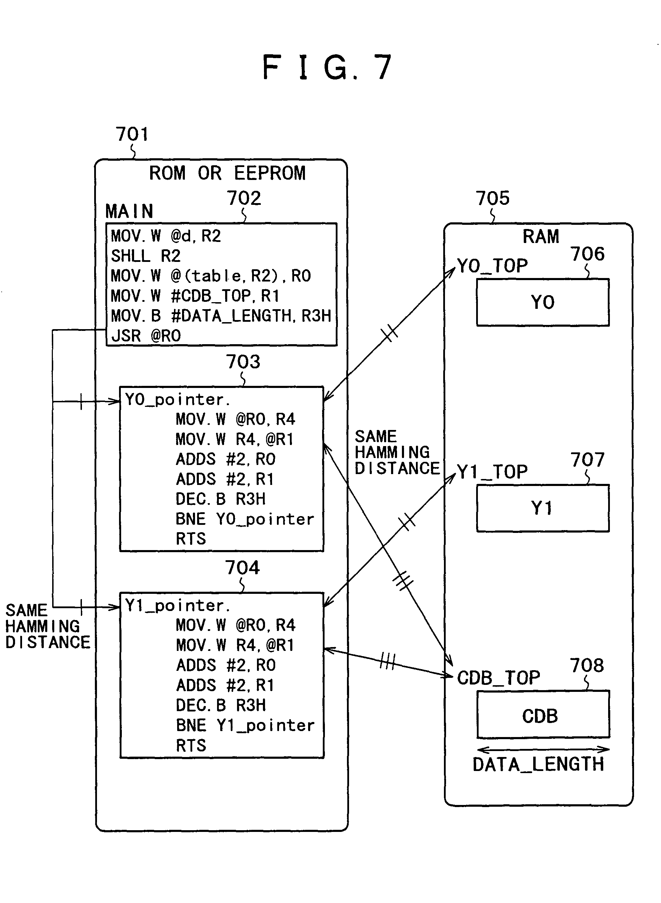

FIG. 7 is a basic structure representation illustrating positioning of a program and positioning of data in a memory, in accordance with the second embodiment of the present invention. It is assumed that a main routine (702) and two copy routines (703, 704) are allocated to the ROM or EEPROM (701), the addresses of MOV.W @R0, R4 in the Copy routines are given by Y0_pointer, Y1_pointer, and the addresses of MOV.W R4, @R1 directly after MOV.W @R0, R4 are given by Y0_pointer+2, Y1_pointer+2, respectively. It is also assumed that the RAM (705) includes three data areas Y0 (706), Y1 (707), and CDB (708), the leading addresses of these data are Y0_TOP, Y1_TOP, and CDB_TOP, respectively, and the address of the MAIN function JSR @R0 is JSR_TOP. On these conditions, the addresses are selected so as to satisfy the following relations:

Ham(JSR_TOP,Y0_pointer) = Ham(JSR_TOP,Y1_pointer) (condition 3),
Ham(Y0_pointer,Y0_TOP) = Ham(Y1_pointer) (condition 4), and
Ham(Y0_pointer+2, CDB_TOP) = Ham (Y1_pointer+2, CDB_TOP) (condition 5).

Such an allocation can be realized by specifying, for example, DATA_LENGTH=1024/16= 64,
JSR_TOP = 8000,
Y0_pointer = 8100,
Y1_pointer = 8200,
Y0_TOP = C100,
Y1_TOP = C800, and
CDB_TOP = D000.

It will be apparent that these satisfy the condition 3, condition 4, and condition 5.

Next, the program codes of the embodiment will be given. The operation will easily be presumed from the embodiment 1, and the explanation will be omitted.

[Embodiment 2]

```
/***DATA TABLE***/
Table:
.DATA.W Y0_pointer;(=8100)
.DATA.W Y1_pointer;(=8200)


/***MAIN ROUTINE***/
MAIN:
```

```
7FF6      MOV.W @d, R2

7FF8      SHLL R2

7FFA      MOV.W @(table, R2), R0

7FFC      MOV.W#CDB_TOP, R1

7FFE      MOV.B #DATA_LENGTH, R3H

8000      JSR @R0


/***MOVE Y0 TO CDB***/

Y0_pointer:

8100      MOV.W  #Y0_TOP, R0

8102      MOV.W  #CDB_TOP, R1

8104      MOV.B #DATA_LENGTH, R3H

Loop0:

8106      MOV.W @R1, R4

8108      MOV.W R4, @R0

810A      ADDS  #2, R0

810C      ADDS  #2, R1

810E      DEC.B,           R3H

8110      BNE Loop0

8112      RTS


/***MOVE Y1 TO CDB***/

Y1_pointer:

8200      MOV.W  #Y1_TOP, R0

8202      MOV.W  #CDB_TOP, R1

8204      MOV.B  #DATA_LENGTH, R3H

Loop1:
```

```
8206      MOV.W @R1, R4

8208      MOV.W R4, @R0

820A      ADDS  #2, R0

820C      ADDS  #2, R1

820E      DEC.B,          R3H

8210      BNE Loop1

8212      RTS
```

In both of the first and second embodiments, the ways in which the program counter changes are all the same. However, in general, there are some cases having difficulty in allocating the addresses so as to make the hamming distances completely uniform. In such cases, virtually the same effect can be estimated by making the variations of the power consumption accompanied with the changes of the program counter significantly smaller than the noises accompanied with measurements. It has been found that discriminating the differences as many as 4 bits involved a great difficulty of detecting program operation, in various measurement environments. And, when there were differences of 5 or more bits, it is possible to clearly discriminate the address positions even in consideration of extraneous noise. Therefore, a recommended coordination of the hamming distances such that there is no more than a 4-bit hamming distance difference between a first hamming distance of a first address value and a second hamming distance of a second address value.

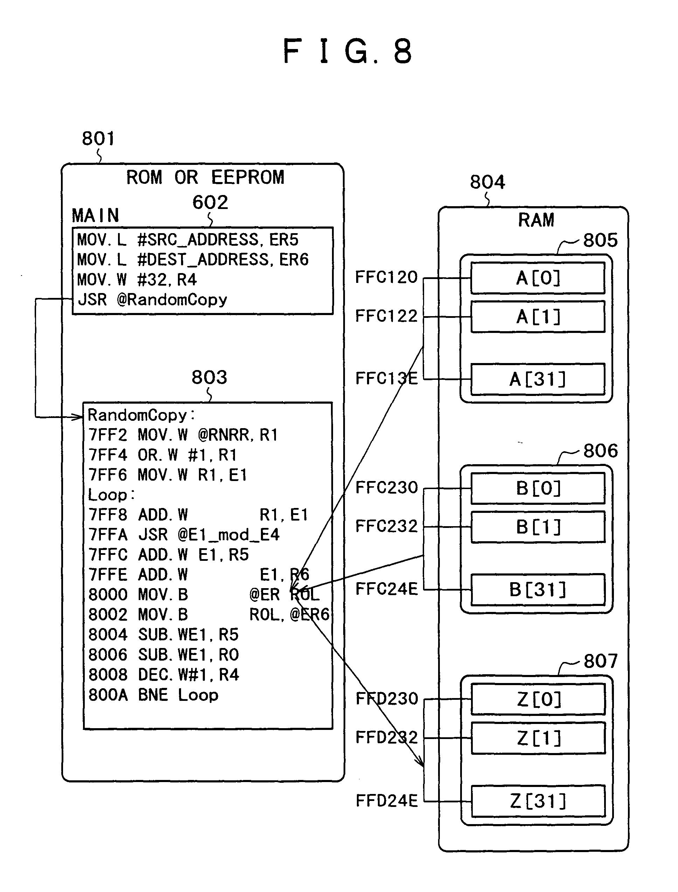

FIG. 8 is a basic structure representation illustrating positioning of a program and positioning of data in a memory, in accordance with a third embodiment of the present invention.

The third embodiment employs the instructions for AE45C microcomputer from Hitachi Ltd. The programs on the AE45C are described in the assembler language for H8/300H, which is slightly different from the assembler language for H8/300, as already explained. In the H8/300H, the instructions in the H8/300 are expanded, and necessary explanations will be added. In the H8/300H, the register is expanded to 32 bits. In the following program, this is indicated with addition of the symbol after ER, and when the symbol j is added after ER, it indicates the upper half bits.

In this embodiment, a RAM (804) is assumingly allocated to the addresses from FF0000 to FFFFFF. The RAM assumingly contains a data area A (805) having the length of 512 bits, a data area B (806) having the same length as the data area A, and a data area Z (807) having the same length. This embodiment is to move data located in the data area A or B to the data area Z. Here, consider moving the data so as not to be able to find out, by observing the power consumption accompanied with the changes of the program counter, which area of data is moved. This case needs random numbers, and this embodiment assumes an IC chip including a random number generator as the source of unpredictable information. A great many IC card microcomputers incorporate a random number generator.

Various random number generators and pseudo random numbers that are generated by processing information not open to the public through mathematical operations, etc., may be used. A typical random number generator converts natural unpredictable fluctuations into a 0/1 bit string, by amplifying the thermal noises of a resistor and then converting the noises into 0/1 signals on an appropriate threshold voltage. At present, there is not a method discovered which correctly predicts the resistance variations of a resistor that generates thermal noises. Thus, the 0/1 bit string generated by the thermal noises is also unpredictable.

There are several methods of making up the pseudo random numbers. For example, on the assumption that a and X[0] are two secret numbers having a data length of n bits inside the IC chip, and using these values and the relational expression:

$$X[j] = a*X[j-1] \bmod 2^n \qquad\qquad \text{(expression 1)},$$

a method for inductively defining X[0], X[1], X[2], ... is known. For example, by assuming a = 2100005341 and n = 32, and selecting the number not equal to 0 to X[0], the pseudo random numbers of a statistically good nature can be generated. Such a method is discussed in additional detail in the "Random Number," by Masanori Fusimi, University Of Tokyo Press, 1989.

Various methods for making pseudo random numbers can be combined in use. For example, the random number generator using the thermal noises of a resistor generates the initial value X[0] only, and the (expression 1) produces the following values (X[1], X[2], ...).

Most of the IC chips for the IC card incorporate some random number generator, which can be utilized for the source of unpredictable information.

According to present the invention, in the program that processes inner secret information of a cryptosystem, the data related to the secret information is allocated at positions of the same hamming distances from the addresses where the instructions are allocated, whereby the differences of the power consumption created from the differences of the addresses are reduced to a great extent, which makes it difficult to detect the inner information by observing the differences of the power consumption.

The program in the third embodiment includes a MAIN part (802) on a ROM (or EEPROM) (801), copy routine (803), and E1_mod_E4 routine. Here, the E1_mod_E4 routine is to store the residue by dividing the data of E1 by E4 in E1. The program of this subroutine is not necessary for the explanation of this embodiment, and the explanation thereof will be omitted.

The MAIN part executes the setting of data. The copy routine moves 8-bits block data in a random order, which is different from the embodiments 1, 2. The copy routine makes an offset on the basis of the formula:

$$E1 = R1*(counter\ value)\ mod\ E4$$

with an address R5 of the transfer origin as the reference point, reads a data located at R5+E1, and writes the data into the data area Z. In the above formula, E4 denotes a bit number, and R1 a random number. R1 has to be an odd number (here, the register and the values stored therein are expressed with the same symbols). R1 differs in each execution, and the order of transfer by each block differs each time accordingly.

In the reading of data, at each block is generated the power consumption that is proportional to the hamming distance between each data and the address (8000) where the move operation: MOV.B @ER5, R0L

is allocated. Now, since the order of transfer is random, if the sets of all the hamming distances in each transfer coincide, it is impossible to discriminate whether the data in the area A is transferred or the data in the area B is transferred. For example, if FFC110 and FFC210 are selected as SCR_ADDRESS, the above condition will be satisfied. In regard to these address values, the pattern of the power consumption generated when the addresses are read from the smaller one to the larger is different; however, if the order is disregarded, the pattern is the same, and it is substantially impossible to discriminate when the transfer order is random.

[Embodiment 3]

```
/***DATA SET ROUTINE***/

MOV.L           #SOURCE_ADDRESS, ER5

MOV.L        ·  #DEST_ADDRESS, ER6

MOV.W           #32, R4

JSR             @RandomCopy


/***Random Copy Routine***/

RandomCopy:

7FF2      MOV.W @RNRR, R1

7FF4      OR.W#1, R1

7FF6      MOV.W R1, E1

Loop:

7FF8      ADD.W           R1, E1

7FFA      JSR @E1_mod_E4

7FFC      ADD.W           E1, R5

7FFE      ADD.W           E1, R6

8000      MOV.B           @ER5, R0L

8002      MOV.B           R0L, @ER6

8004      SUB.W           E1, R5

8006      SUB.W           E1, R0

8008      DEC.W           #1, R4

800A      BNE  Loop
```

System And Method Implementation

Portions of the present invention may be conveniently implemented using a conventional general purpose or a specialized digital computer or microprocessor programmed according to the teachings of the present disclosure, as will be apparent to those skilled in the computer art.

Appropriate software coding can readily be prepared by skilled programmers based on the teachings of the present disclosure, as will be apparent to those skilled in the software art. The invention may also be implemented by the preparation of application specific integrated circuits or by interconnecting an appropriate network of conventional component circuits, as will be readily apparent to those skilled in the art.

The present invention includes a computer program product which is a storage medium (media) having instructions stored thereon/in which can be used to control, or cause, a computer to perform any of the processes of the present invention. The storage medium can include, but is not limited to, any type of disk including floppy disks, mini disks (MD's), optical disks, DVD, CD-ROMS, micro-drive, and magneto-optical disks, ROMs, RAMs, EPROMs, EEPROMs, DRAMs, VRAMs, flash memory devices (including flash cards), magnetic or optical cards, nanosystems (including molecular memory ICs), RAID devices, remote data storage/archive/warehousing, or any type of media or device suitable for storing instructions and/or data.

Stored on any one of the computer readable medium (media), the present invention includes software for controlling both the hardware of the general purpose/specialized computer or microprocessor, and for enabling the computer or microprocessor to interact with a human user or other mechanism utilizing the results of the present invention. Such software may include, but is not limited to, device drivers, operating systems, and user applications. Ultimately, such computer readable media further includes software for performing the present invention, as described above.

Included in the programming (software) of the general/specialized computer or microprocessor are software modules for implementing the teachings of the present invention, including, but not limited to, executing a first particular instruction having a first program counter starting address, accessing a first memory portion, wherein the step of accessing the memory portion is associated with a first hamming distance, executing a second particular instruction having a second program counter starting address, and accessing a second memory portion, wherein the step of accessing the second memory portion is associated with a second hamming distance, wherein a hamming distance difference between the first hamming distance and the second hamming distance is no more than a predefined value, according to processes of the present invention.

In the foregoing specification, the invention has been described with reference to specific embodiments thereof. It will, however, be evident that various modifications and changes may be made thereto without departing from the broader spirit and scope of the invention. The specification and drawings are, accordingly, to be regarded in an illustrative rather than a restrictive sense.

**Claims**

1. A method for accessing a memory of an information processing device having a central processing unit and a program counter, the method comprising:

   executing a first particular instruction having a first program counter starting address;
   accessing a first memory portion, wherein the step of accessing the memory portion is associated with a first hamming distance;
   executing a second particular instruction having a second program counter starting address; and
   accessing a second memory portion, wherein the step of accessing the second memory portion is associated with a second hamming distance, wherein a hamming distance difference between the first hamming distance and the second hamming distance is no more than a predefined value.

2. The method of Claim 1, wherein the first particular instruction and the second particular instruction each is one of:

   a move instruction to move data from the memory to the central processing unit;
   a move instruction to move data from the central processing unit to the memory;
   a conditional branch instruction; and
   a jump instruction.

3. The method of Claim 1, wherein the first memory portion and the second memory portion each includes one of particular data or a program subroutine.

4. The method of Claim 1, wherein the first hamming distance is a hamming distance between the first program counter starting address and a first memory portion address, wherein the second hamming distance is a hamming distance between the second program counter starting address and a second memory portion address.

5. The method of Claim 4, wherein the first program counter starting address is equal to the second program counter starting address.

6. The method of Claim 4, wherein $|Ham(PCS[I], PCD[I]) - Ham(PCS[J], PCD[J])| \leq 4$ ($1 \leq I < J \leq m$), wherein Ham(PCS[I], PCD[I]) is the first hamming distance, wherein Ham(PCS[J], PCD[J]) is the second hamming distance, wherein |Ham(PCS[I], PCD[I]) - Ham(PCS[J]|, PCD[J]) is a magnitude of the hamming distance difference between the first hamming distance and the second hamming distance, wherein PCS[I] is the first program starting address, wherein PCD[I] is the first memory portion address, wherein PCS[J] is the second program starting address, wherein PCD[J] is the second memory portion address, wherein m is an integer greater than 1, wherein I is a specific value of m, wherein J is another specific value of m, wherein 4 is the predefined value.

7. The method of Claim 6, wherein PCS[I] equals PCS [J].

8. The method of Claim 6, wherein Ham(PCS[I], PCD[I]) = Ham(PCS[J], PCD[J]).

9. The method of Claim 7, wherein Ham(PCS[I], PCD[I]) = Ham(PCS[J], PCD[J]).

10. The method of Claim 1, wherein the method is configured to prevent tampering with a program in the memory.

11. A method for accessing a memory of an information processing device having a central processing unit and a program counter, the method comprising:

executing a first particular instruction having a first program counter starting address;
accessing a first group of memory portions, wherein the step of accessing the first group of memory portions is associated with a first set of hamming distances;
executing a second particular instruction having a second program counter starting address; and
accessing a second group of memory portions, wherein the step of accessing the second group of memory portions is associated with a second set of hamming distances, wherein the first set of hamming distances and the second set of hamming distances coincide.

12. The method of Claim 11, wherein the first particular instruction and the second particular instruction each is one of :

a move instruction to move data from the memory to the central processing unit;
a move instruction to move data from the central processing unit to the memory;
a conditional branch instruction; and
a jump instruction.

13. The method of Claim 11, wherein each memory portion includes one of particular data or a program subroutine.

14. The method of Claim 11, wherein an nth group of memory portions is to be accessed after execution of an nth particular instruction having an nth program counter starting address, wherein accessing the nth group of memory portions is associated with an nth set of hamming distances, wherein n is an integer greater than 2, wherein all sets of hamming distances coincide.

15. The information processing method of Claim 14, wherein a particular set of hamming distances is given by S[j] = (Ham(PCS, PCD[j,k]); k=1,2,...,m)(j=1,2,...,n), wherein S[1] = S[2] = ... = S[n], wherein PCD[1,1], PCD[1,2], ..., PCD[1,m] is an addresses set of the first group of memory portions, wherein PCD[2,1], PCD[2,2], ..., PCD[2,m] is an addresses set of the second group of memory portions, wherein PCD[n,1], PCD[n,2], ..., PCD[n,m] is an addresses set of the nth group of memory portions, wherein PCD[1,1], PCD[1,2], ..., PCD[1,m] is a positions set allocated for the first group of memory portions, wherein PCD[2,1], PCD[2,2], ..., PCD[2,m] is a positions set allocated for the second group of memory portions, wherein PCD[n,1], PCD[n,2], ..., PCD[n,m] is a positions set allocated for the nth group of memory portions, wherein n is an integer greater than 2, wherein m is an integer greater than 2.

16. The information processing method of Claim 15, wherein a particular PCD[j,k] is different than another particular PCD[j,k] such that an accessing order between the particular PCD[j,k] and the other particular PCD[j,k] is unpredictable.

**17.** The method of Claim 11, wherein the method is configured to prevent tampering with a program in the memory.

**18.** The method of Claim 1, wherein any particular address is represented by a series of high voltage bits and low voltage bits, wherein a high voltage bit has a predetermined high power level, wherein a low voltage bit has a predetermined low power level, wherein any particular hamming distance corresponds to a change in power consumption due to voltage changes between accessed bits.

**19.** The method of Claim 11, wherein any particular address is represented by a series of high voltage bits and low voltage bits, wherein a high voltage bit has a predetermined high power level, wherein a low voltage bit has a predetermined low power level, wherein any particular hamming distance corresponds to a change in power consumption due to voltage changes between accessed bits.

**20.** A computer-readable medium carrying one or more sequences of one or more instructions for accessing a memory of an information processing device having a central processing unit and a program counter, the one or more sequences of one or more instructions including instructions which, when executed by one or more processors, cause the one or more processors to perform the steps of:

executing a first particular instruction having a first program counter starting address;
accessing a first memory portion, wherein the step of accessing the memory portion is associated with a first hamming distance;
executing a second particular instruction having a second program counter starting address; and
accessing a second memory portion, wherein the step of accessing the second memory portion is associated with a second hamming distance, wherein a hamming distance difference between the first hamming distance and the second hamming distance is no more than a predefined value.

EP 1 406 145 A2

# FIG.1 (PRIOR ART)

# FIG.2 (PRIOR ART)

# F I G. 3 (PRIOR ART)

# FIG.4 (PRIOR ART)

# FIG.5 (PRIOR ART)

# F I G. 6

# FIG. 7

701

### ROM OR EEPROM

**MAIN** 702

```
MOV.W @d, R2
SHLL R2
MOV.W @(table, R2), R0
MOV.W #CDB_TOP, R1
MOV.B #DATA_LENGTH, R3H
JSR @R0
```

703

```
Y0_pointer.
        MOV.W @R0, R4
        MOV.W R4, @R1
        ADDS #2, R0
        ADDS #2, R1
        DEC.B R3H
        BNE Y0_pointer
        RTS
```

704

```
Y1_pointer.
        MOV.W @R0, R4
        MOV.W R4, @R1
        ADDS #2, R0
        ADDS #2, R1
        DEC.B R3H
        BNE Y1_pointer
        RTS
```

SAME
HAMMING
DISTANCE

705

### RAM

Y0_TOP 706

Y0

SAME
HAMMING
DISTANCE

Y1_TOP 707

Y1

CDB_TOP 708

CDB

DATA_LENGTH

# F I G. 8

801

## ROM OR EEPROM

MAIN 602

```
MOV. L #SRC_ADDRESS, ER5
MOV. L #DEST_ADDRESS, ER6
MOV. W #32, R4
JSR @RandomCopy
```

803

```
RandomCopy:
7FF2 MOV. W @RNRR, R1
7FF4 OR. W #1, R1
7FF6 MOV. W R1, E1
Loop:
7FF8 ADD. W         R1, E1
7FFA JSR @E1_mod_E4
7FFC ADD. W E1, R5
7FFE ADD. W         E1, R6
8000 MOV. B         @ER ROL
8002 MOV. B         ROL, @ER6
8004 SUB. WE1, R5
8006 SUB. WE1, R0
8008 DEC. W#1, R4
800A BNE Loop
```

804

## RAM

805

| FFC120 | A[0] |
| FFC122 | A[1] |
| FFC13E | A[31] |

806

| FFC230 | B[0] |
| FFC232 | B[1] |
| FFC24E | B[31] |

807

| FFD230 | Z[0] |
| FFD232 | Z[1] |
| FFD24E | Z[31] |